# EUROPÄISCHE PATENTSCHRIFT

(11) **EP 2 643 143 B1**
(45) Veröffentlichungstag und Bekanntmachung des Hinweises auf die Patenterteilung: **23.09.2015**
(21) Anmeldenummer: 11761519.5
(22) Anmeldetag: 24.09.2011
(51) Int. Cl.: B29C 53/82

(54) **MODULARE FERTIGUNGSVORRICHTUNG FÜR INTEGRALE FASER-HALBZEUGE UND VERFAHREN ZUR HERSTELLUNG VON ENDLOSFASER-VERBUNDBAUTEILEN AUS INTEGRALEN FASERVERBUND-HALBZEUGEN MIT EINER HOHLKÖRPERSTRUKTUR**
MODULAR PRODUCTION DEVICE FOR INTEGRAL FIBER SEMIFINISHED PRODUCTS AND METHOD FOR PRODUCING ENDLESS-FIBER COMPOSITE COMPONENTS MADE FROM INTEGRAL FIBER COMPOSITE SEMIFINISHED PRODUCTS HAVING A HOLLOW BODY STRUCTURE
DISPOSITIF DE FABRICATION MODULAIRE DE DEMI-PRODUITS EN FIBRES RÉALISÉS D'UNE SEULE PIÈCE ET PROCÉDÉ DE FABRICATION, À PARTIR DESDITS DEMI-PRODUITS, D'ÉLÉMENTS COMPOSITES EN FIBRES CONTINUES COMPORTANT UNE STRUCTURE À CORPS CREUX

(30) Priorität: 26.11.2010 DE 102010052737
(43) Veröffentlichungstag der Anmeldung: 02.10.2013
(73) Patentinhaber: Daimler AG, 70327 Stuttgart (DE)
(72) Erfinder: ROTH, Daniel, 71083 Herrenberg (DE)
(74) Vertreter: JENSEN & SON
(86) Internationale Anmeldenummer: PCT/EP2011/004791
(87) Internationale Veröffentlichungsnummer: WO 2012/069102

(56) Entgegenhaltungen:
- WO-A1-2009/058060
- FR-A1- 2 664 529
- JP-A- 58 005 221

## Beschreibung

Die Erfindung betrifft eine modulare Fertigungsvorrichtung für integrale Faser-Halbzeuge und ein Verfahren, um Endlosfaser-Verbundbauteile mit einer Hohlkörperstruktur nach der Fertigung solcher integraler Faser-Halbzeuge zu schaffen.

Zur Fertigung von Faserhalbzeugen, die weiter zu Kraftfahrzeug-Komponenten verarbeitet werden und die hohe Festigkeiten bei gleichzeitig geringem Gewicht erbringen, sind verschiedene Verfahren bekannt. Die Herstellung der Kraftfahrzeug-Komponenten erfolgt aus Faser-Halbzeugen, die durch Zugabe eines Matrixmaterials zu den Fasergelegen oder -geweben und anschließender Aushärtung Faserverbund-Komponenten bilden. Die Fasergelege oder Gewebe können per Hand oder maschinell zugeschnitten, gelegt und entsprechend der Strukturbelastungen aufeinander geschichtet werden. Die einzelnen Schichten können dabei beispielsweise durch Sprühkleber oder Nähen fixiert werden. Der so geschaffene Faser-Vorformling wird dann in eine Form eingelegt und mit einem Harz durch Handlaminieren oder Vakuum-Infusion durchtränkt.

Die manuelle Fertigung ist zeitaufwändig, führt zu hohen Toleranzen und wird zu Lasten der Festigkeit nicht mit Endlosfasern durchgeführt, wohingegen bei automatisierten Ablegevertahren vorgegebene Längen maschinell von einem Endlosmaterial abgeschnitten und automatisiert auf einer ebenen oder gekrümmten Form abgelegt werden können. Im finalen Produkt liegt keine Endlosfaser vor, so dass auch dieses eine geringere Festigkeit aufweist.

Zum Ablegen von Endlosfasersträngen, auch Rovings genannt, auf einer im Wesentlichen zylindrischen Form, wird das Faserwickelverfahren verwendet. Hierbei werden Fasern sehr straff und eng aneinander liegend mit einer hohen Maßgenauigkeit positioniert. Zum Wickeln der Fasern ist ein Körper notwendig, der dem Bauteil seine spätere Gestalt gibt, wobei bis dato nur einfache zylindrische Geometrien realisiert werden.

Komplexere Geometrien lassen sich mit Sticken erreichen; hierbei wird durch Fäden ein weiteres Roving auf dem Trägermaterial fixiert. Mit dieser Methode kann das Roving einem fast beliebigen Kurvenverlauf folgen; dabei sind jedoch hohe Wandstärken schwer zu realisieren.

Aus der FR 2664529 ist ein Verfahren bekannt, um asymmetrische Bauteile durch Filament-Wickeltechnik herzustellen. Hierzu werden Kernkörper verwendet, die nach dem Wickeln der Fasern entfernt werden.

Aus der WO 2009058060 A1 ist ein Druckbehälter bekannt. Der Druckbehälter weist einen Einsatz auf, um welchen Verstärkungsfasern in unterschiedlichen Ausrichtungen aufgewickelt sind.

Die JP 58005221 offenbart ein Verfahren zur Herstellung von Rädern aus faserverstärkten Kunststoffen. Dabei werden zwei Formen verwendet, auf welche die Verstärkungsfasern sukzessive aufgewickelt werden.
Ausgehend von diesem Stand der Technik stellt sich die Aufgabe, eine Fertigungsvorrichtung für integrale Faser-Halbzeuge aus Endlosfasern zur Fertigung hohler Stabelemente zu schaffen, die eine komplexe Geometrie aufweisen können und dennoch eine hohe Zug-, Druck- und Torsionsfestigkeit aufweisen.

Diese Aufgabe wird durch eine modulare Fertigungsvorrichtung mit den Merkmalen des Anspruchs 1 gelöst.

Ferner ergibt sich die Aufgabe der Bereitstellung eines Fertigungsverfahrens, mittels dessen auf einfache Weise Endlosfaser-Verbundbauteile aus Endlosfasern herstellbar sind.

Das Verfahren mit den Merkmalen des Anspruchs 9 löst diese Aufgabe.

Die Aufgabe der Schaffung eines zug-, druck- und torsionsfesten Endlosfaser-Verbundbauteils wird durch das Verbundbauteil mit den Merkmalen des Anspruchs 14 gelöst.

Weiterbildungen der Gegenstände und des Verfahrens sind in den Unteransprüchen ausgeführt.

Eine erfindungsgemäße modulare Fertigungsvorrichtung für integrale Faser-Halbzeuge aus Endlosfasern zur Fertigung von Endlosfaser-Verbundbauteilen mit einer Hohlkörperstruktur umfasst dabei erfindungsgemäß wenigstens ein beweglich geführtes Faserführungsrohr, das üblicherweise über eine Spindel mit einer Endlosfaser beziehungsweise einem Endlosfaserbündel beschickt wird. Weiter weist es zumindest ein Basiselement und mehrere Hohlkörper auf, die durch einen Spalt beabstandet in Reihe an einer Innenwandung des Basiselements befestigt werden. Dabei weist der Hohlkörper zumindest an einer Seite wenigstens einen Sockel auf. Der Spalt zwischen den Hohlkörpern hat eine Breite, die es genau zulässt, dass das Faserführungsrohr dazwischen passieren kann. Damit ist zunächst eine Anordnung geschaffen, die es erlaubt, eine in Bezug auf das Basiselement untere Seite der Hohlkörper vorteilhaft mit einer Faserwicklung zu versehen, was durch das Führungsrohr geschieht, ohne dass dieses allseitig um die zu umwickelnden Hohlkörper herumgeführt werden muss.

Vielmehr kann das Führungsrohr an einem Roboterarm angeordnet werden und erreicht dennoch alle Seiten der Hohlkörper.

Weiter umfasst die Vorrichtung eine Anzahl an Zwischenraumkörpern, die passgenau in Bezug auf die Spaltform in den Spalt einsetzbar sind - damit wird Stabilität der Hohlkörperreihe erreicht, nachdem erste Wicklungen vollführt sind. Damit die Endlosfaser geschickt und unter Spannung um die Hohlkörper geführt werden kann, ist an den stirnseitigen Enden der Hohlkörperreihe jeweils ein Umkehrelement vorgesehen, das jeweils an der Innenwandung des Basiselements befestigt ist. Vorteilhaft erlaubt die erfindungsgemäße Vorrichtung das einfache, allseitige und automatisierte Umwickeln der Hohlkörper, die in Reihe angeordnet ein Stabelement bilden.

Die modulare Fertigungsvorrichtung kann ferner vorsehen, dass das Basiselement mit zumindest einem lösbar an dem Basiselement befestigbaren Deckelelement als ein Schalungselement für die Endlosfaser-Verbundbauteile ausgeführt werden kann; so kann durch Befüllen der Schalung mit Matrixmaterial, zumeist mit Harz, das Faser-Verbundbauteil gefertigt werden.

Sollen größere Hohlstreben geformt werden, so kann die modulare Fertigungsvorrichtung aus vielen Schalungselementen, die Komponenten eines Schalungselemente-Sets sind, errichtet werden. Es werden dann mehrere Kanal bildende Basiselemente benötigt, die Verbindungsöffnungen haben, über die zumindest zwei Basiselemente formschlüssig miteinander verbindbar sind.

Schließlich können komplexe dreidimensionale Strebenstrukturen gebildet werden, indem die Schalungselemente des Schalungselemente-Sets Strebenelemente und Knotenelemente zur Errichtung einer luftdicht abgeschlossenen dreidimensionalen Schalungsstruktur sind. Die Strebenelemente und Knotenelemente können jeweils aus den Kanal bildenden Basiselementen und optional den Deckelelementen bestehen, abhängig davon, ob die Schalungselemente mit Matrixmaterial befüllt werden sollen oder ob das gewickelte Faser-Halbzeug von den Basiselementen abgelöst und dann mit Matrixmaterial infiltriert wird.

Dies kann etwa in einem Vakuumsack geschehen.

Die Sockel der Hohlkörper können als Befüllöffnung gestaltet sein; so können die Hohlkörper etwa mit leichtem Material wie etwa einem Leichtmetall, einer Leichtmetalllegierung oder einem Polymer befüllt werden, um der Struktur noch mehr Stabilität zu verleihen.

Ferner kann an der Innenwandung des Basiselements für jeden der festzulegenden Hohlkörper ein Überstand vorliegen, der mit dem zumindest einen Sockel etwa nach "LEGO^{®}-Art" formschlüssig in lösbaren Eingriff gebracht wird.

Die mit der Endlosfaser zu umwickelnden und letztlich den Kern des Faserhalbzeugs bildenden Hohlraumkörper können Polyeder, Quader, Zylinder oder Körper mit einem elliptischen Querschnitt sein.

Um eine ideale Umwicklung der Hohlkörper-Reihe zu erlauben, wird vorgeschlagen, dass die Zwischenraumkörper an zumindest einer Randseite einen Umlenkstutzen aufweisen.

Um nun die Endlosfaser-Verbundbauteile mit einer Hohlkörperstruktur zu fertigen, wird die erfindungsgemäße Fertigungsvorrichtung verwendet. Dabei wird zunächst die gewünschte Anzahl an Hohlkörpern in Reihe an einer Innenwandung des Basiselements befestigt und die Hohlkörper werden durch einen Spalt voneinander beabstandet. Das Festlegen der Hohlkörper an dem Basiselement erfolgt mittels des Sockels jedes Hohlkörpers. Schließlich wird jeweils ein Umkehrelement stirnseitig der vorgesehenen Reihe an Hohlkörpern an der Innenwandung des Basiselements angeordnet, falls es nicht von vornherein an dem Basiselement in der gewünschten Position vorliegt.

Nun kann die Endlosfaser mittels des Führungsrohrs entlang eines Legepfads zugeführt und abgelegt werden. Der Legepfad umfasst:
a) einen Unterbodenpfad, der von einem ersten Umkehrelement und wechselseitig um die Sockel der Reihe der Hohlkörper bis zu dem zweiten Umkehrelement verläuft; dabei wird das Faserführungsrohr durch die Spalte geführt,
b) einen Pfad, der eine dreidimensionale Form um die Hohlkörper beschreibt und der sich zumindest von einem ersten Ende der Reihe der Hohlkörper bis zu einem zweiten Ende erstreckt, und
c) einen Oberpfad, der auf der von dem Unterpfad abgewandten Seite der Hohlkörper verläuft und der sich von einem ersten Ende der Reihe der Hohlkörper bis zu einem zweiten Ende wechselseitig um die Umlenkstutzen der Zwischenraumelemente erstreckt.

Diese wurden vor Ablegen des vorstehenden oder des nachstehenden Pfades in die Spalte eingefügt und stabilisieren die Struktur; ferner bieten sie in ihrer bevorzugten Form Umlenkpunkte für den Oberpfad oder auch für den nachstehenden Seitenpfad. So umfasst der Legepfad weiter den Seitenpfad, bei dem die Seiten der Hohlkörper umwickelt werden.

So wird ein integrales Faser-Halbzeug erhalten, bei dem die Hohlkörper durch das Ablegen der Endlosfaser entlang des Legepfads einen Kern des integralen Faser-Halbzeugs bilden. Schließlich erfolgen - und dies kann auf unterschiedliche Weise geschehen - das Imprägnieren des Faser-Halbzeugs mit einem Harzmaterial und damit das Erhalten des Endlosfaser-Verbundbauteils.

Das Bereitstellen der modularen Fertigungsvorrichtung kann das Verbinden von zumindest zwei Basiselementen an deren Verbindungsöffnungen formschlüssig miteinander umfassen, um entsprechend große Stabelemente realisieren zu können. Weiter kann nach dem Erhalten eines integralen Faser-Halbzeugs das lösbare Befestigen eines Deckelelements auf jeweils einem Kanal bildenden Basiselement erfolgen, um ein Schalungselement zu erhalten. Dann kann das Imprägnieren des Faser-Halbzeugs mit einem Matrix- oder Harzmaterial durch Befüllen des Schalungselements erreicht werden.

Schließlich kann das Bereitstellen der modularen Fertigungsvorrichtung auch das Verbinden vieler Kanal bildenden Basiselemente umfassen, die teils als Strebenelemente und teils als Knotenelemente ausgebildet sind. Auch dort erfolgt das formschlüssige Verbinden an den Verbindungsöffnungen. So kann eine dreidimensionale Struktur errichtet werden.

Nach dem Erhalten des integralen Faser-Halbzeugs kann wiederum das Deckelelement auf jeweils einem Basiselement festgelegt werden, um eine luftdicht abgeschlossene dreidimensionale Schalungsstruktur zu erhalten. Dann kann das Faser-Halbzeug mit dem Harzmaterial durch Befüllen der Schalungsstruktur imprägniert werden.

Grundsätzlich kann das Imprägnieren des Faser-Halbzeugs mit einem Harzmaterial auch nach dem Lösen des Faser-Halbzeugs aus Endlosfasern von dem Basiselement ausgeführt werden.

So kann durch die erfindungsgemäße Vorrichtung und das entsprechende erfindungsgemäße Verfahren ein leichtes und dennoch zug-, druck- und torsionsfestes Endlosfaser-Verbundbauteil erhalten werden, das einen Kern aufweist, der durch die in Reihe wechselweise mit den passgenau zwischen zwei benachbarten Hohlkörpern eingefügten Zwischenraumkörpern angeordneten Hohlkörpern gebildet wird.

Den Hohlkörpern kann durch eine Füllung aus einem leichten Material, insbesondere einem Leichtmetall oder einer Leichtmetallgierung oder einem Polymer weitere Stabilität verliehen werden. Vor allem kann so die Querkraftstabilität des gebildeten Endlosfaser-Verbundbauteils erhöht werden. Das Füllmaterial kann auch nach seiner Dämpfungswirkung bezüglich auftreffender Verformungskräfte ausgewählt werden.

Besonders vorteilhaft ist, dass auf die erfindungsgemäße Weise sogar hochkomplexe Endlosfaser-Verbundbauteile mit einer dreidimensionalen Gerüststruktur, etwa einer Käfigstruktur gebildet werden können, die im Kraftfahrzeugbau vielfältige Anwendungen finden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezügszeichen versehen sein. Die Figuren sind lediglich eine schematische Darstellung einer Ausführungsform der Erfindung.

Dabei zeigen:
- Fig. 1: eine perspektivische Seitenansicht eines Faserführungsrohrs mit Spindel,
- Fig. 2: eine perspektivische Untenansicht eines erfindungsgemäßen Hohlraumkörpers,
- Fig. 3: eine perspektivische Seitenansicht von in Reihe angeordneten Hohlraumkörpern und stirnseitigen Umkehrelementen,
- Fig. 4: eine perspektivische Seitenansicht der in Reihe angeordneten Hohlraumkörper aus Fig. 3 mit dazwischen angeordneten Zwischenraumkörpern,
- Fig. 5: eine perspektivische Seitenansicht eines Schalungselements aus kanalförmigem Basiselement und Deckelelement,
- Fig. 6: eine perspektivische Seitenansicht der in Reihe angeordneten Hohlraumkörper mit einer schematischen Darstellung der Pfadsystematik eines Faserführungsrohrs für den Unterbodenpfad,
- Fig. 7: eine perspektivische Untenansicht auf eine entlang des Unterbodenpfads abgelegte Faser der in Reihe angeordneten Hohlraumkörper zur Bildung eines Unterbodensegments,
- Fig. 8: eine perspektivische Seitenansicht der in Reihe angeordneten Hohlraumkörper mit dreidimensional um die Hohlkörper geführten Faserverlauf,
- Fig. 9: eine perspektivische Seitenansicht der in Reihe angeordneten Hohlraumkörper mit einer entlang eines Oberpfads abgelegten Faser zur Bildung des Obergeflechts,
- Fig. 10: eine perspektivische Seitenansicht der in Reihe angeordneten Hohlraumkörper mit mehreren um die Seiten der Hohlraumkörper abgelegten Fasern,
- Fig. 11: eine perspektivische Ansicht einer Schalung mit eingelegten Hohlraumkörpern,
- Fig. 12: eine perspektivische Ansicht einer beispielhaften Ausführungsform der zu einem Kanalsystem zusammen gesetzten Basiselemente einer Schalung,
- Fig. 13: eine perspektivische Ansicht der Schalung aus Fig. 12 mit eingelegter Endlosfaser und angedeuteten Deckelelementen,
- Fig. 14: eine perspektivische Ansicht der Schalung aus Fig. 12, luftdicht abgeschlossen.

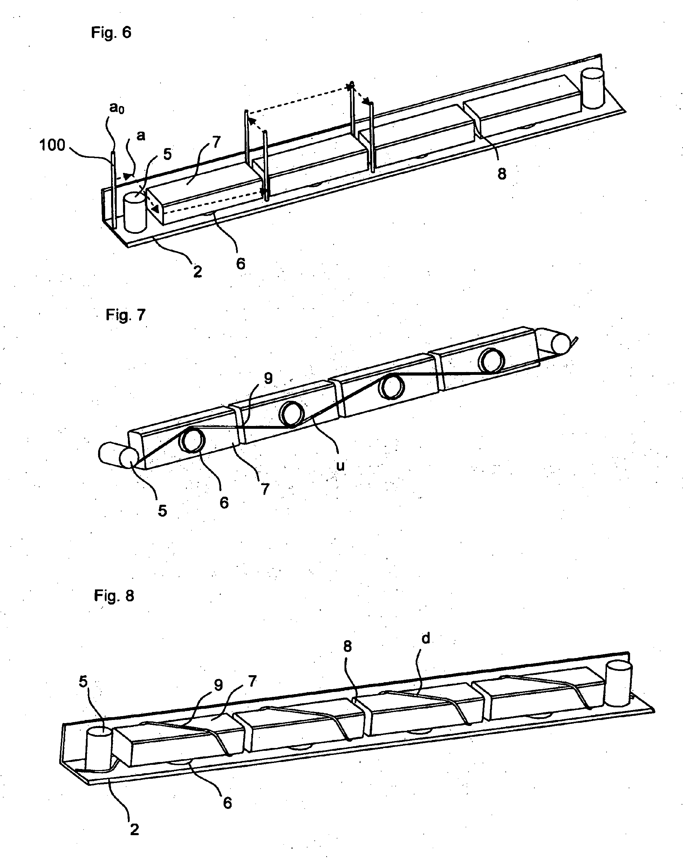

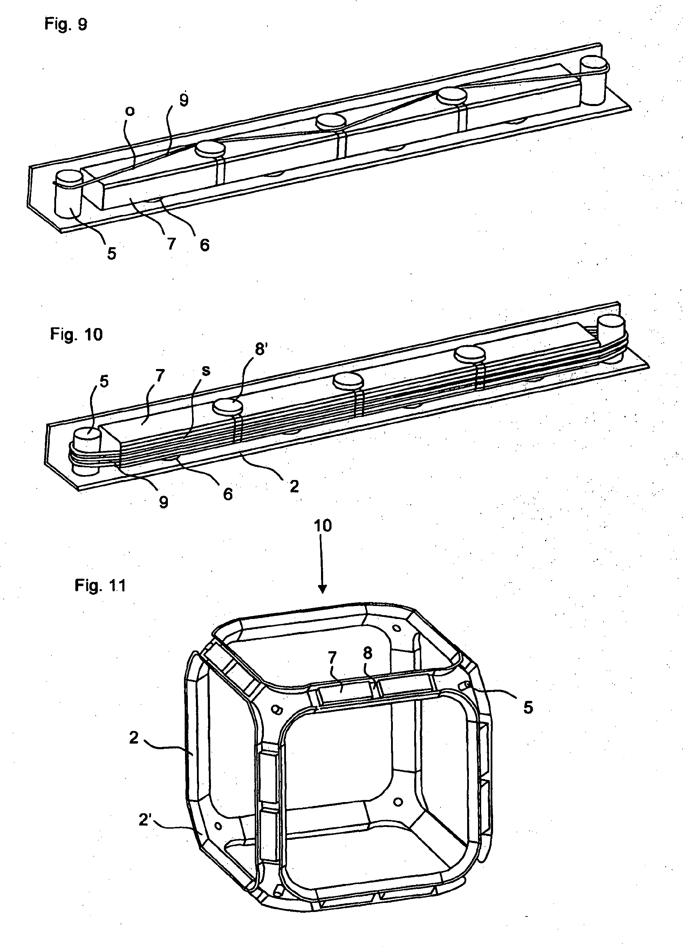

Eine einfache modulare Fertigungsvorrichtung zur Fertigung eines integralen Faser-Halbzeuges aus Endlosfasern zur Fertigung eines stabförmigen Endlosfaser-Verbundbauteiles ist in Fig. 6 und Fig. 9 mit den wesentlichen Komponenten gezeigt.

Dort (Fig. 6) zeigt die modulare Fertigungsvorrichtung das geführte Faserführungsrohr 100, sowie das Basiselement 2, auf dem vier Hohlkörper 7 durch je einen Spalt 8 voneinander beabstandet in Reihe an einer Innenwandung des Basiselements 2 befestigt sind. Die Spalte 8 sind erforderlich, um Platz zur Durchführung des Faserführungsrohrs 100 zu bieten.

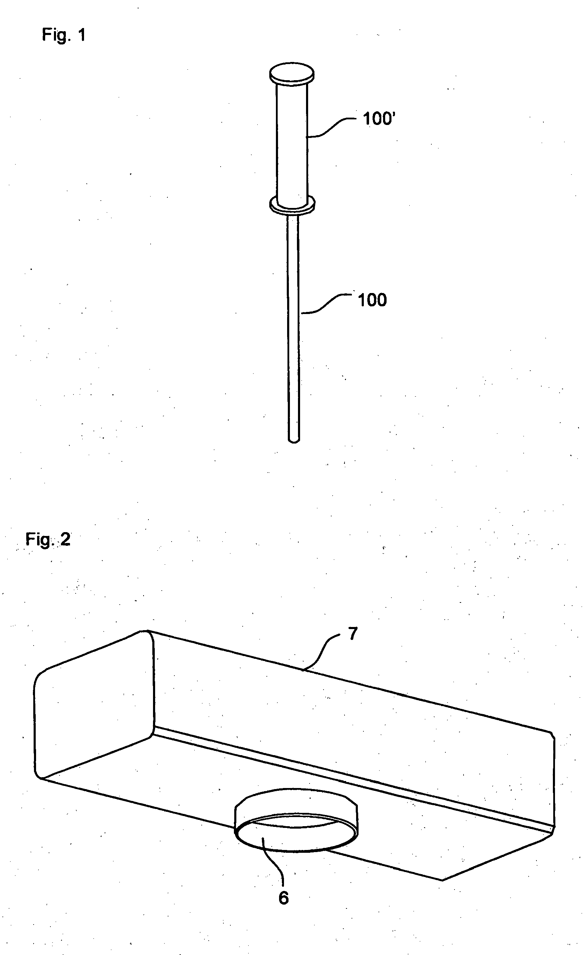

Ein Faserführungsrohr 100, das zum präzisen Ablegen und Führen der Faseranordnung 9 bzw. des Rovings eingesetzt wird, kann direkt mit einer Spindel 100', die als Faseroder Rovinglager dient, verbunden sein (vg. Fig. 1); das ist aber nicht zwingend erforderlich. Die Anordnung der Spindel 100', die zur vorteilhaft automatisierten Durchführung der Wicklung an einem Roboterarm positioniert ist, wird im Nachfolgenden nicht weiter ausgeführt.

Unter "Faseranordnung 9" kann eine Einzelfaser, aber auch ein Faserstrang oder miteinander verflochtene Fasern gleicher oder unterschiedlicher Beschaffenheit verstanden werden; ferner wird die Faseranordnung hierin als Endlosfaser geführt. Die Faseranordnung 9 wird von oben nach unten durch das hohle Faserführungsrohr 100 geführt, wobei der nachstehend beschriebene Legepfad, bestehend aus Teilschritten a bis d, den das Faserführungsrohr zurücklegt, von dem Roboterarm entsprechend geführt wird.

Ein einzelner Hohlkörper 7 mit rechteckigem Hohlkörperquerschnitt ist in Fig. 2 dargestellt; wie deutlich wird, weist der Hohlkörper 7 an seiner zu dem Basiselement 2 weisenden Seite einen Sockel 6 auf. Die Geometrie des Hohlkörpers 7 kann flexibel gewählt werden. Dabei sind runde, elliptische, rechteckige und andere Hohlraumkörperquerschnitte möglich. Der gezeigte Sockel 3 ist zylindrisch, kann aber auch eine polygonale oder elliptische Grundform haben. Er dient der Beabstandung der Hohlkörper 7 von der Basis; um die Wicklung unter Ermöglichung von Umlenkung zur zielgerichteten Führung der Faseranordnung 9 zu erlauben.

Es ist ferner möglich, einen weiteren Sockel, figurativ nicht dargestellt, auf der Oberseite der Hohlkörper 7 anzubringen, der demselben Zweck dient wie die an der Unterseite der Hohlkörper 7 angeordneten Sockel 3, oder noch weitere Sockel an den Seiten des Hohlkörpers 7 vorzusehen.

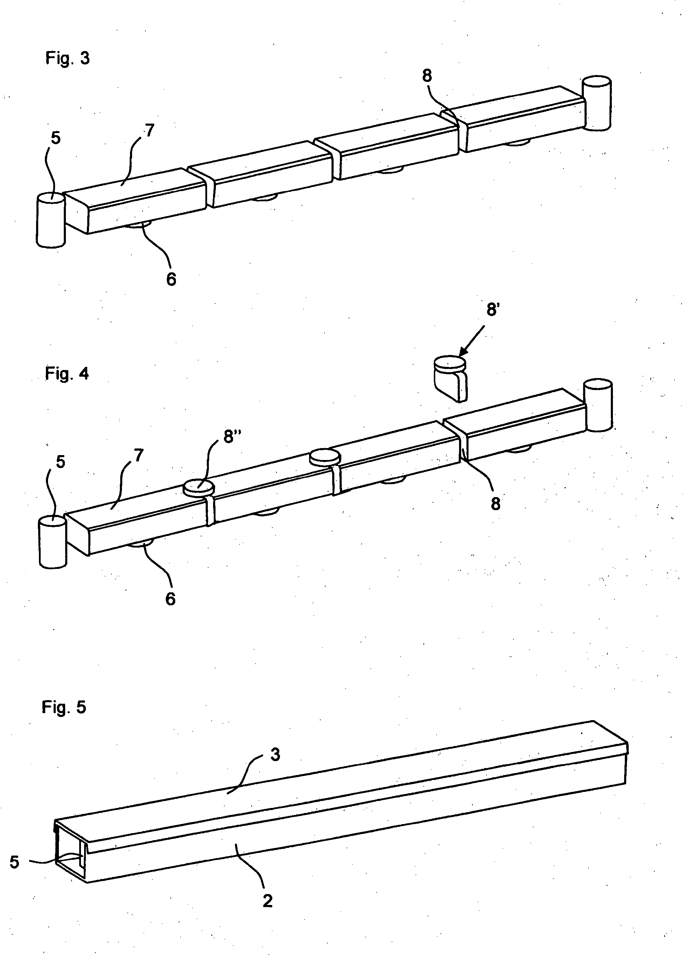

Schließlich umfasst die modulare Fertigungsvorrichtung eine Anzahl an in Figuren 4, 9 und 10 zu sehenden Zwischenraumkörper 8', wobei ein Zwischenraumkörper 8' passgenau in Bezug auf eine Spaltform in den Spalt 8 zwischen jeweils zwei Hohlkörpern 7 einsetzbar ist. Die in die Spalte 8 einzufügenden Zwischenraumkörper 8' kommen kurz vor Ende bei der Ausführung des Legepfades zum Einsatz. Mit diesen Zwischenraumkörpern 8' werden die Spalte 8 zwischen den Hohlkörpern 7, siehe auch Fig. 4 ausgefüllt.

Die stirnseitig der Hohlkörper-Reihe angeordneten Umkehrelemente 5, siehe Fig. 3,4 und Fig. 7 bis 13, sind ein wichtiger Bestandteil der modularen Fertigungsvorrichtung und dienen der Umlenkung der Faseranordnung 9 bei der Ausführung des Legepfades. Die Umkehrelemente 5 werden von dem Faserstrang 9, respektive der Faseranordnung 9, umwickelt, so dass diese unter Spannung wieder zurückgeführt werden kann.

Die modulare Fertigungsvorrichtung kann ferner ein Deckelelement 3 umfassen, siehe Fig. 5, das an dem Basiselement 2 lösbar befestigt werden kann. So wird ein Schalungselement für die Endlosfaser-Verbundbauteile geschaffen, in dem das Faser-Halbzeug mit Matrixmaterial imprägniert werden kann.

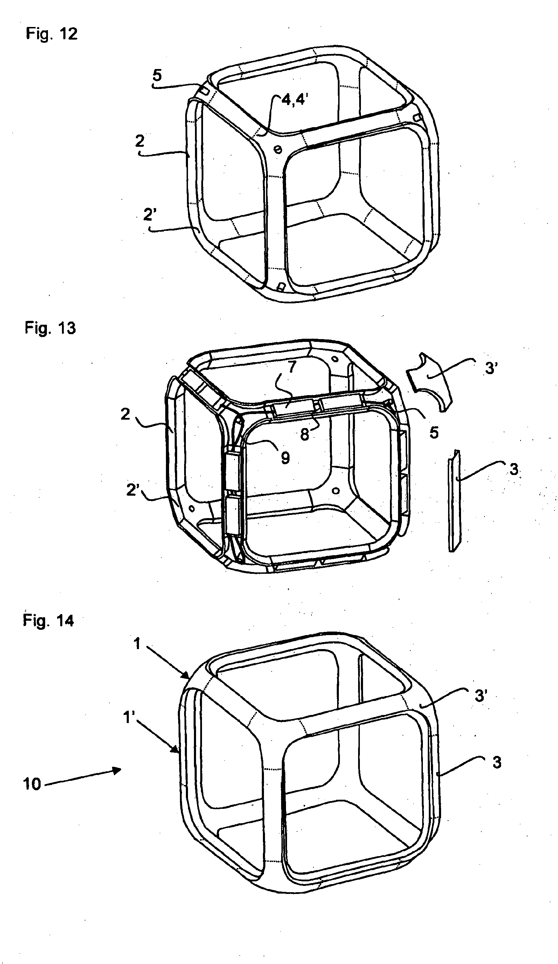

Die modulare Fertigungsvorrichtung kann zur Bildung dreidimensionaler Hohlkörperstrukturen der Schalung an sich und ebenfalls der Faser-Halbzeuge eine Vielzahl an Schalungselementen 1,1', siehe Fig. 14, als Komponenten eines Schalungselemente-Sets enthalten. Das Schalungselemente-Set umfasst eine gewünschte Anzahl an Kanal bildenden Basiselementen 2,2' die Verbindungsöffnungen 4,4' bereitstellen, über die zumindest zwei Basiselemente 2,2' formschlüssig miteinander verbindbar sind. Die gewünschte Anzahl" ergibt sich aus der darzustellenden Bauteilgeometrie auf einfache Weise. Die Schalungselemente 1,1' des Schalungselemente-Sets können Strebenelemente 1' und Knotenelemente 1 zur Errichtung einer luftdicht abgeschlossenen dreidimensionalen Schalungsstruktur 10 sein; wobei die Strebenelemente 1' und Knotenelemente 1 jeweils aus den Kanal bildenden Basiselementen 2,2' und den Deckelelementen 3,3' bestehen.

Um den Faserverbundkörper aus dem Faserhalbzeug zu fertigen, ist es nicht für jede Bauteilgeometrie erforderlich, die Deckelelemente aufzusetzen. Es kann auch geeignet sein, die Faserhalbzeuge von den Basiselementen 2,2' zu lösen und danach zu imprägnieren, anstatt eine mit Deckel 3,3' gebildete Schalung mit Matrixmaterial zu beaufschlagen.

Mit Hilfe des Schalungselemente-Sets, das als Baukastensystem funktioniert und das die genannten verschiedenen Strebenelemente 1' und Knotenelemente 1 umfasst, lassen sich beliebig komplexe dreidimensionale Hohlkörperstrukturen 10 abbilden, wobei sich hier die Bezeichnung "Hohlkörperstruktur" auf das von den Strebenelementen 1' und Knotenelementen 1 umgebene Innenvolumen bezieht.

Die "Strebenelemente 1'" sind dabei lineare Elemente mit zwei Verbindungsöffnungen, wohingegen unter der Bezeichnung "Knotenelemente 1'" sämtliche gekrümmten wie auch verzweigten Schalungselemente fallen, die daher zwei oder mehr Verbindungsöffnungen aufweisen können.

An den Basiselementen 2,2' der Strebenelemente 1' und der Knotenelemente 1 können die Umkehrelemente 5 angeordnet sein. '

Um eine Matrixmaterial- oder Harzinjektion zur Schaffung des Verbundbauteils in der aus den Schalungselementen 1,1' geschaffenen Schalung 10 zu ermöglichen, kann zumindest eines dieser Schalungselemente 1,1', ein Deckelelement 3,3' und/oder ein Basiselement 2,2', eine Harzinjektionsanschlusseinrichtung aufweisen.

Die mit dem Schalungselemente-Set erstellbare Schalung 10 für ein Endlosfaser-Verbundbauteil, das eine komplexe dreidimensionale Hohlkörperstruktur aufweist, ist so aufgebaut, dass die jeweils aus den Kanal bildenden Basiselementen 2,2' und den dazugehörigen Deckelelementen 3,3' gebildeten Streben- und Knotenelemente 1,1' entsprechend der dreidimensionalen Hohlkörperstruktur des herzustellenden Endlosfaser-Verbundbauteils miteinander verbunden sind und somit ein Kanalsystem bilden. Die Schalung kann durch ihre Gestaltung aus Schalungselementen wiederverwendet werden, da diese trotz der komplexen dreidimensionalen Hohlkörperstruktur nach Herstellung des Verbundbauteils zerstörungsfrei vorliegen.

Mit der Schalung lassen sich auch mit Streben umspannte Hohlkörperstrukturen oder Stabtragwerke eines Kraftfahrzeugs wie eine Kraftfahrzeug-Rohbaustruktur oder eine Fahrgastzellenstruktur herstellen. Um das in der Schalung herstellbare Verbundbauteil maßgerecht anfertigen zu können, kann die Schalung einen Stützrahmen umfassen, der die zum Kanalsystem verbundenen Basiselemente lösbar fixiert.

Das erfindungsgemäße Verfahren dient der automatisierten Fertigung jedweder Art von hohlen Stabelementen, die in einem Stabtragwerk wie etwa einer Automobilkarosserie, einem Fahrradrahmen oder anderen Rahmenelementen zum Einsatz kommen. Ferner können die Stabelemente eines Stabtragwerkes mit diesem Verfahren zudem untereinander verbunden werden und bilden so ein geschlossenes, zusammenhängendes und integrales Halbzeug für ein Stabtragwerk, das eine große Druck-, Zug- und Torsionsfestigkeit aufweist.

Entscheidend für die Ausführung des erfindungsgemäßen Verfahrens ist das Vorliegen von Hohlkörpern, die durch das Verfahren mit Faseranordnungen umwickelt oder umflochten werden und die so den Kern des hohlen Stabelements bilden. Auf Grund ihrer Beschaffenheit als hohle Körper, beeinflussen die vorgenannten Hohlkörper das Gewicht von Faserverburldbauteilen, die im Automobilbau eingesetzt werden und dem Leichtbaugedanken genügen sollen, nur in einem geringen Maße.

Es kann vorgesehen werden, die Hohlraumkörper nach Fertigstellung des Halbzeugs mit einem leichten Material zu füllen, das zum einen eine hohe Querkraftstabilität aufweist und zum eine anderen hohe Dämpfungswirkung hat. Damit können die aus diesen Halbzeugen gefertigten Bauteile weiter hinsichtlich der Crashsicherheit optimiert werden.

Das Verfahren der Erfindung umfasst im Wesentlichen die folgenden Schritte:
Zunächst ist eine der modularen Fertigungsvorrichtungen der oben genannten Art zu erstellen. Dabei wird eine bauteilgeometrie- und bauteilgrößenabhängige Anzahl von Hohlkörpern 7 in Reihe an einer Innenwandung des Basiselements 2,2' angeordnet; die Hohlkörper 7 werden durch einen Spalt 8 voneinander beabstandet angeordnet, siehe Fig. 3. Die Befestigung der Hohlkörper 7 kann mittels deren Sockel 6 erfolgen. Ein Umkehrelement 5 ist jeweils stirnseitig der vorgesehenen Reihe an Hohlkörpern 7 an der Innenwandung des Basiselements 2,2' vorzusehen. Es kann dort entweder fest vorliegen oder gegebenenfalls dort befestigt werden.

Dann wird eine Endlosfaser mittels des Faserführungsrohrs 100 zugeführt und die Endlosfaser 9 wird entlang eines Legepfads abgelegt. Die Führung des Faserführungsrohrs 100 ist in Fig. 6 mittels Pfeil a verdeutlicht. Das erfindungsgemäße Verfahren dient der Fertigung eines dreidimensionalen Faser-Halbzeugs, ohne dass ein Roboter mit dem Faserführungsrohr 100 um das gesamte, zu fertigende Hohlkörperelement herum geführt werden muss.

Der Legepfad umfasst hier beispielhaft einen Unterbodenpfad u, siehe Fig. 7, der von einem ersten Umkehrelement 5 (Startstellung a₀) und wechselseitig um die Sockel 6 der Reihe der Hohlkörper 7 bis zu dem zweiten Umkehrelement 5 verläuft. Die Faser 9 ist dabei von dem linken Umkehrelement 5 diagonal zu dem ersten Sockel geführt, während der Faserverlauf zwischen dem letzten Sockel und dem rechten Umkehrelement geradlinig gestaltet ist. Die in Fig. 6 gezeigte Darstellung verdeutlicht die Führung des Faserzuführrohres 100 zum Ablegen des Unterbodenpfads u. Dabei ist die dem Betrachter zugewandte Seitenwand des kanalförmigen Basiselementes 2 aufgeschnitten. Das Faserführungsrohr 100 wird wechselseitig durch die Spalte 8 geführt.

Grundsätzlich können, gerade bei komplexeren Geometrien, zugleich mehrere Faserführungsrohre 100 geführt werden; möglichst automatisiert mittels entsprechender robotergeführter Legeköpfe.

Eine mögliche Pfadführung verläuft von Startstellung a₀ um den Umkehrzylinder 5 herum, zwischen diesem und dem ersten Hohlkörper 7 hindurch und auf der vorderen Seite (rechte Seite) des ersten Hohlkörpers 7 weiter, entlang dem Hohlkörpers 7 und dann durch den Spalt 8 zwischen den ersten beiden Hohlkörpern 7 hindurch, entlang dem zweiten Hohlkörper 7 und zurück durch den nächsten Spalt 8 und so weiter, bis der zweite Umkehrzylinder 5 erreicht wird. Diese Pfadsystematik kann nun auch von der rechten auf die linke Seite angewandt werden und beliebig oft wiederholt werden.

Beim ersten Lauf des Unterbodenpfads u kann das Faserführungsrohr 100 immer auf einer Ebene geführt werden, die auf der Höhe des Sockels 6 unter dem Hohlkörper 7 liegt. Nicht dargestellt ist die Systematik des Pfadverlaufs durch einen Spalt zwischen zwei Hohlkörpern 7, wenn dort schon eine Faser 9 gezogen wurde. Hierbei muss das Faserführungsrohr 100 zwischen den Hohlkörpern 7 von der Sockelebene auf eine höhere Ebene angehoben werden um nicht mit den zuvor abgelegten Fasern 9 zu kollidieren.

Die Faserführung kann je nach Lastanforderung variiert werden. Das Ergebnis einer ersten Pfadführung vom ersten zum zweiten Umkehrzylinder 5 ist in Fig. 7 gezeigt.

Weiter ist ein Pfad d von dem Verfahren umfasst und beispielhaft in Fig. 8 dargestellt. Dieser beschreibt eine dreidimensionale Form um die Hohlkörper 7. Er erstreckt sich zumindest von einem ersten Ende der Reihe der Hohlkörper 7 bis zu einem zweiten Ende. Auch hier kann eine gewünschte Anzahl von Läufen absolviert werden.

Nun wird ein Oberpfad o, siehe Fig. 9, abgelegt, der auf der von dem Unterpfad abgewandten Seite der Hohlkörper 7 verläuft und der sich von einem ersten Ende der Reihe der Hohlkörper 7 bis zu einem zweiten Ende wechselseitig um die Umlenkstutzen 8" der Zwischenraumelemente 8' erstreckt, die vor Ablegen des Pfades c und/oder d in die Spalte 8 eingefügt worden sind. Der Umlenkstutzen 8" des Zwischenraumkörpers 8', siehe Fig. 4, ist an zumindest einer Randseite des Umlenkstutzens 8" positioniert.

Schließlich wird, wie in Fig. 10 dargestellt, ein Seitenpfad s abgelegt, bei dem die Seiten der Hohlkörper 7 umwickelt werden. Dabei wird nun das integrale Faser-Halbzeug fertiggestellt.

Unter Umständen kann die Reihenfolge der unterschiedlichen Legepfade, wenn bereits gelegte Fasern nicht den folgenden Legepfad kreuzen, variiert werden. Auch sind von den Darstellungen abweichende Legewege der verschiedenen Pfade denkbar. Bei einer komplex gestalteten Stabtragwerk bildenden Hohlraumstruktur wie in Fig. 13 ergibt sich eine Vielzahl möglicher Legepfade der Fasern 9. Bei umfangreichen Hohlraumstrukturen ist auch der Einsatz mehrere gleichzeitig operierender Führungsrohre denkbar.

Die Hohlkörper 7 bilden durch das Ablegen der Endlosfaser 9 entlang des Legepfads den Kern des integralen Faser-Halbzeugs.

Zum Erhalt des Endlosfaser-Verbundbauteils ist nun noch das Imprägnieren des Faser-Halbzeugs mit einem Harz- oder Matrixmaterial erforderlich.

Dazu gibt es im Wesentlichen zwei Vorgehensweisen: Das Basiselement 2,2' kann als separates Bauteil gefertigt werden und die Hohlkörper 7 lassen sich mittels der Sockel 6 auf das Basiselement 2,2' aufstecken. Nachdem die Faseranordnung 9 abgelegt wurde, kann das Basiselement 2,2' entfernt werden und das entstandene Faser-Halbzeug wird auf herkömmlich Art und Weise durch Harzinfiltration zum Verbundbauteil geführt.

Alternativ kann das erfindungsgemäße Verfahren zur Herstellung eines Endlosfaser-Verbundbauteils mit einer dreidimensionalen Hohlkörperstruktur unter Verwendung der vorgenannten Schalung ausgeführt werden.

Es umfasst zunächst den Schritt des Zusammensetzens der Kanal bildenden Strebenund Knotenelemente aus dem Schalungselemente-Set, so dass das gebildete Kanalsystem die dreidimensionale Hohlkörperstruktur des Bauteils abbildet. In dieses Kanalsystem wird die Endlosfaser mittels der Hohlkörper unter Absolvieren des beschriebenen Legepfades bzw. unter Absolvieren verschiedener Legepfadstrecken abgelegt und nach Beendigung des Ablegevorgangs, bei dem das integrale Faser-Halbzeug erhalten wurde, werden die zu den Basiselementen zugehörigen Deckelelemente angeordnet, wodurch das Kanalsystem luftdicht abgeschlossen wird. Nun erfolgt durch die zu diesem Zweck vorgesehene Harzinjektionsanschlusseinrichtung das Zuführen von Matrixmaterial in das Kanalsystem, das nach Aushärtung mit dem integralen Faser-Halbzeug den Verbund bildet.

Das anschließende Entformen des entstandenen Endlosfaser-Verbundbauteils kann durch Abnehmen der Deckelelemente und Lösen der Basiselemente erfolgen.

Weitere Ausführungsformen des erfindungsgemäßen Verfahrens können vorsehen, dass nach oder während des Zusammensetzens der Basiselemente ein Stützrahmen hinzugenommen wird, der die Basiselemente lösbar fixiert und das Kanalsystem entsprechend der gewünschten dreidimensionalen Hohlkörperstruktur maßgerecht stützt.

Das Ablegen der Endlosfaser erfolgt vorzugsweise unter lastfallgerechter, kraftschlussund spannungsoptimierter Verteilung der Fasern, um dem herzustellenden Endlosfaser-Verbundbauteil die gewünschten Festigkeitseigenschaften zu verleihen. Die Verwendung einer einzigen Endlosfaser oder eines einzigen Rovings, beziehungsweise eines einzigen Endlosfaserstrangs, die/der das gesamte Kanalsystem durchzieht, verleiht dem herzustellenden Endlosfaser-Verbundbauteil zusätzliche Festigkeit.

Der nach dem Ablegen der Faser durchgeführte Harzinjektionsschritt kann durch Spritzpressen (RTM-Verfahren) erfolgen.

Ein erfindungsgemäß geschaffenes Endlos-Faserverbundbauteil mit einer dreidimensionalen Hohlkörperstruktur ist dadurch charakterisiert, dass ein im Verbund mit dem Matrixmaterial vorliegender Faseranteil durch eine einzige Endlosfaser oder einen einzigen Endlosfaserstrang bereitgestellt wird, die/der ununterbrochen die gesamte dreidimensionale Hohlkörperstruktur des Bauteils durchzieht.

Das einstückige Endlosfaser-Verbundbauteil, das erfindungsgemäß gefertigt wurde, ist an den Kreuzungs- und Knickpunkten der Hohlkörperstruktur knoten- und verbindungsstückfrei und kann in einer Ausführungsform der Erfindung ein Kraftfahrzeugrahmenstruktur-Bauteil wie etwa ein Kraftfahrzeugrohbauteil oder eine Fahrgastzelle sein. Es vereinigt die Vorteile der hohen Festigkeit und Steifigkeit bei geringem Gewicht und trägt damit der angestrebten Leichtbauweise im Fahrzeugbau Rechnung.

In Fig. 12 sind die zum Kanalsystem zusammengesetzten Basiselemente 2,2' der Streben- und Knotenelemente zu sehen, die an ihren Verbindungsöffnungen 4,4' miteinander verbunden sind und so das Kanalsystem bilden, das entlang der Würfelkanten verläuft. Die Knoten-Basiselemente 2' sind dabei in den abgerundeten Würfelecken angeordnet und weisen im Kreuzungspunkt der Kanäle jeweils einen Faserverteilungsstift 5 auf, der die Aufgabe des Umkehrelements erfüllt. Wie in Fig. 13 zu sehen ist, kann eine mit Hilfe des Führungsrohrs eingelegte Endlosfaser 9 - hierunter fällt auch ein Endlosfaserstrang - mit Hilfe der Umkehrelemente 5 auf verschiedene Weise innerhalb des Kanalsystems verlegt werden, bis das gesamte Kanalsystem mit einer einzigen Endlosfaser durchzogen ist.

In Fig. 13 sind ferner ein Knoten-Deckelelement 3' und ein Streben-Deckelelement 3 gezeigt, welche nach erfolgtem Einlegen der Endlosfaser 9 auf die jeweiligen Basiselemente 2,2' aufgesetzt werden, so dass das gesamte Kanalsystem, wie in Fig. 14 zu sehen, luftdicht abgeschlossen ist. Die hier gezeigte Schalung 10 kann nun durch Harzinjektion mit Harz infiltriert werden. Zu diesem Zweck kann an einem oder mehreren der Schalungselemente eine (nicht dargestellte) Harzinjektionseinrichtung vorgesehen sein. Für den Fall, dass der Formhohlraum, der durch das mit den Deckelelementen luftdicht verschlossene Kanalsystem gebildet wird, vor der Harzinjektion zur Vermeidung von Lufteinschlüssen evakuiert werden soll, kann ferner an einem der Schalungselemente 1,1' eine entsprechende Anschlussvorrichtung zur Verbindung mit einer Vakuumpumpe vorgesehen sein (ebenfalls nicht dargestellt).

So erlaubt das erfindungsgemäße Verfahren, das mit der erfindungsgemäßen Vorrichtung ausgeführt wird, die automatisierte Fertigung von hohlen integralen Faser-Halbzeugen. Der finale Vorformling besteht aus einer oder mehreren Endlosfasern und ist maschinell herstellbar. Einzelne Stabelemente oder hockkomplexe Stabstrukturen können dem Lastfall angepasst ausgelegt werden.

## Patentansprüche

1. Modulare Fertigungsvorrichtung für integrale Faser-Halbzeuge aus Endlosfasern (9) zur Fertigung von Endlosfaser-Verbundbauteilen mit einer Hohlkörperstruktur, wobei
die modulare Fertigungsvorrichtung zumindest
- ein beweglich geführtes Faserführungsrohr (100),
- zumindest ein Basiselement (2,2'),
- eine Mehrzahl an Hohlkörpern (7), die durch einen Spalt (8) beabstandet in Reihe an einer Innenwandung des Basiselements (2,2') festlegbar sind, wobei jeder Hohlkörper (7) zumindest an einer Seite zumindest einen Sockel (6) aufweist, und wobei der Spalt (8) eine Breite aufweist, die eine Passage für das Faserführungsrohr (100) bereitstellt, und
- eine Mehrzahl an Zwischenraumkörpern (8') aufweist, wobei ein Zwischenraumkörper (8') passgenau in Bezug auf eine Spaltform in den Spalt (8) einsetzbar ist, und
wobei das Basiselement (2,2') an der Innenwandung stirnseitig der vorgesehenen Reihe an Hohlkörpern (7) jeweils ein Umkehrelement (5) zum Umlenken der Endlosfasern aufweist.

2. Fertigungsvorrichtung nach Anspruch 1,
**dadurch gekennzeichnet, dass**
die modulare Fertigungsvorrichtung das Basiselement (2,2') mit zumindest einem lösbar an dem Basiselement (2,2') befestigbaren Deckelelement (3,3') als ein Schalungselement (1,1') für die Endlosfaser-Verbundbauteile umfasst.

3. Fertigungsvorrichtung nach 2,
**dadurch gekennzeichnet, dass**
die modulare Fertigungsvorrichtung eine Mehrzahl von Schalungselementen (1,1') als Komponenten eines Schalungselemente-Sets zur Bildung dreidimensionaler Hohlkörperstrukturen enthält, wobei das Schalungselemente-Set eine Mehrzahl Kanal bildender Basiselemente (2,2') aufweist, die Verbindungsöffnungen (4,4') bereitstellen, über die zumindest zwei Basiselemente (2,2') formschlüssig miteinander verbindbar sind.

4. Fertigungsvorrichtung nach Anspruch 2 oder 3,
**dadurch gekennzeichnet, dass**
die Schalungselemente (1,1') des Schalungselemente-Sets Strebenelemente (1) und Knotenelemente (1') zur Errichtung einer luftdicht abgeschlossenen dreidimensionalen Schalungsstruktur (10) sind, wobei die Strebenelemente (1) und Knotenelemente (1') jeweils aus den Kanal bildenden Basiselementen (2,2') und den Deckelelementen (3,3') bestehen.

5. Fertigungsvorrichtung nach zumindest einem der Ansprüche 1 bis 4,
**dadurch gekennzeichnet, dass**
der Sockel (6) eine Hohlkörper-Befüllöffnung bereitstellt.

6. Fertigungsvorrichtung nach zumindest einem der Ansprüche 1 bis 5,
**dadurch gekennzeichnet, dass**
an der Innenwandung des Basiselements (2,2') für jeden der festzulegenden Hohlkörper (7) ein Überstand bereitgestellt ist, der mit dem zumindest einen Sockel (6) formschlüssig in lösbaren Eingriff bringbar ist.

7. Fertigungsvorrichtung nach zumindest einem der Ansprüche 1 bis 6,
**dadurch gekennzeichnet, dass**
der Hohlraumkörper (7) ein Polyeder, insbesondere ein Quader, ein Zylinder oder ein Körper mit einem elliptischen Querschnitt ist.

8. Fertigungsvorrichtung nach zumindest einem der Ansprüche 1 bis 7,
**dadurch gekennzeichnet, dass**
der Zwischenraumkörper (8') an zumindest einer Randseite einen Umlenkstutzen (8") aufweist.

9. Verfahren zur Fertigung von Endlosfaser-Verbundbauteilen mit einer Hohlkörperstruktur unter Verwendung einer Fertigungsvorrichtung nach zumindest einem der Ansprüche 1 bis 8,
umfassend die Schritte
- Bereitstellen der modularen Fertigungsvorrichtung, dabei Anordnen der Mehrzahl an Hohlkörpern (7) in Reihe an einer Innenwandung des Basiselements (2,2'), Beabstanden der Hohlkörper (7) durch einen Spalt (8) voneinander und Festlegen der Hohlkörper (7) an dem Basiselement (2,2') mittels des zumindest einen Sockels (6), wobei jeweils ein Umkehrelement (5) stirnseitig der vorgesehenen Reihe an Hohlkörpern (7) an der Innenwandung des Basiselements (2,2') vorgesehen ist,
- Zuführen einer Endlosfaser mittels des Faserführungsrohrs (100) und Ablegen der Endlosfaser (9) entlang eines Legepfads, der zumindest umfasst:
a) einen Unterbodenpfad (u), der von einem ersten Umkehrelement (5) und wechselseitig um die Sockel (6) der Reihe der Hohlkörper (7) bis zu dem zweiten Umkehrelement (5) verläuft, dabei Führen des Faserführungsrohrs (100) durch die Spalte (8),
b) einen Pfad (d), der eine dreidimensionale Form um die Hohlkörper (7) beschreibt und der sich zumindest von einem ersten Ende der Reihe der Hohlkörper (7) bis zu einem zweiten Ende erstreckt,
c) einen Oberpfad (o), der auf der von dem Unterpfad (u) abgewandten Seite der Hohlkörper (7) verläuft und der sich von einem ersten Ende der Reihe der Hohlkörper (7) bis zu einem zweiten Ende wechselseitig um die Umlenkstutzen (8") der Zwischenraumelemente (8') erstreckt, die vor Ablegen des Pfades c) und/oder d) in die Spalte (8) eingefügt worden sind, und
d) einen Seitenpfad (s), bei dem die Seiten der Hohlkörper (7) umwickelt werden, dabei Erhalten eines integralen Faser-Halbzeugs, wobei die Hohlkörper (7) durch das Ablegen der Endlosfaser (9) entlang des Legepfads einen Kern des integralen Faser-Halbzeugs bilden,
dann
- Imprägnieren des Faser-Halbzeugs mit einem Harzmaterial und Erhalten des Endlosfaser-Verbundbauteils.

10. Verfahren nach Anspruch 9,
umfassend die Schritte
zum Bereitstellen der modulare Fertigungsvorrichtung Verbinden von zumindest zwei Basiselementen (2,2') an deren Verbindungsöffnungen (4,4') formschlüssig miteinander, und
nach dem Erhalten eines integralen Faser-Halbzeugs lösbar Befestigen eines Deckelelements (3,3') auf jeweils einem den Kanal bildenden Basiselement (2,2'), dabei Erhalten eines Schalungselements (1,1') und
- Imprägnieren des Faser-Halbzeugs mit einem Harzmaterial durch Befüllen des Schalungselements (1,1').

11. Verfahren nach Anspruch 10,
umfassend die Schritte
zum Bereitstellen der modulare Fertigungsvorrichtung Verbinden einer Mehrzahl von Kanal bildenden Basiselementen (2,2'), die als Strebenelemente (1) und Knotenelemente (1') ausgebildet sind, an deren Verbindungsöffnungen (4,4') formschlüssig miteinander, dabei Errichten einer dreidimensionalen Struktur, und nach dem Erhalten eines integralen Faser-Halbzeugs lösbar Befestigen eines Deckelelements (3,3') auf jeweils einem Basiselement (2,2'),
dabei Erhalten einer luftdicht abgeschlossenen dreidimensionalen Schalungsstruktur (10) und
- Imprägnieren des Faser-Halbzeugs mit einem Harzmaterial durch Befüllen der Schalungsstruktur (10).

12. Verfahren nach Anspruch 9,
wobei das Imprägnieren des Faser-Halbzeugs mit einem Harzmaterial nach dem Lösen des Faser-Halbzeugs aus Endlosfasern (9) von dem Basiselement (2,2') ausgeführt wird, insbesondere unter Verwendung eines Vakuumsackes.

13. Verfahren nach einem der Ansprüche 9 bis 12,
umfassend den Schritt
des Befüllens der Hohlkörper (7) vor Ausführen des Legepfades nach Fertigstellen des Legepfades oder nach Lösen des Faser-Halbzeugs aus Endlosfasern (9) von dem Basiselement (2,2') dabei
- Befüllen der Hohlkörper (7) durch den zumindest einen Sockel (6) mit einem Befüllmaterial.

14. Endlosfaser-Verbundbauteil, das eine gewickelte und mit Matrixmaterial imprägnierte gewickelte Endlosfaseranordnung umfasst,
**dadurch gekennzeichnet, dass**
das Endlosfaser-Verbundbauteil einen Kern aufweist, der durch eine Mehrzahl an Hohlkörpern (7) und wechselweise mit den Hohlkörpern (7) in Reihe angeordneten Zwischenraumkörpern (8'), die passgenau zwischen zwei benachbarten Hohlkörpern (7) eingefügt sind, gebildet wird.

15. Endlosfaser-Verbundbauteil nach Anspruch 14,
**dadurch gekennzeichnet, dass**
die Hohlkörper (7) eine Füllung aus einem leichten Material, insbesondere einem Leichtmetall oder einer Leichtmetalllegierung oder einem Polymer aufweisen.

16. Endlosfaser-Verbundbauteil, nach Anspruch 14 oder 15
**dadurch gekennzeichnet, dass**
das Endlosfaser-Verbundbauteil eine dreidimensionale Gerüststruktur hat.

## Claims

1. Modular production device for integral fibre semi-finished products made of continuous fibres (9) for producing continuous fibre composite components having a hollow body structure, wherein the modular production device comprises
- at least one movably guided fibre guide tube (100),
- at least one base element (2, 2'),
- a plurality of hollow bodies (7), which can be secured to an inner wall of the base element (2, 2') in a row while being spaced by a gap (8), wherein each hollow body (7) has at least one foot (6) on at least one side, the gap (8) having a width which provides a passage for the fibre guide tube (100), and
- a plurality of interstice bodies (8'), wherein a interstice body (8') can be installed into position in the gap (8) while matching a gap shape, and
wherein the base element (2, 2') has on the inner wall at the end face of the row of hollow bodies (7) provided a reversing element (5) each for deflecting the continuous fibres.

2. Production device according to claim 1,
**characterised in that**
the modular production device comprises the base element (2, 2'), together with at least one cover element (3, 3') which can be releasably secured to the base element (2, 2'), to act as a sheathing element (1, 1') for the continuous fibre composite components.

3. Production device according to claim 2,
**characterised in that**
the modular production device comprises a plurality of sheathing elements (1, 1') as components of a sheathing element set for forming three-dimensional hollow body structures, wherein the sheathing element set comprises a plurality of passage-forming base elements (2, 2'), which provide connecting openings (4, 4'), via which the at least two base elements (2, 2') can be positively connected to one another.

4. Production device according to claim 2 or 3,
**characterised in that**
the sheathing elements (1, 1') of the sheathing element set are brace elements (1) and node elements (1') for erecting an air-tight enclosed sheathing structure (10), the brace elements (1) and the node elements (1') consisting of the passage-forming base elements (2, 2') and the cover elements (3, 3').

5. Production device according to one or more of claims 1 to 4,
**characterised in that**
the foot (6) provides a hollow body filling opening.

6. Production device according to one or more of claims 1 to 5,
**characterised in that**
at the inner wall of the base element (2, 2'), a projection which can be brought into positive, releasable engagement with the at least one foot (6) is provided for each hollow body (7) to be fixed.

7. Production device according to one or more of claims 1 to 6,
**characterised in that**
the hollow body (7) is a polyhedron, in particular a cuboid, a cylinder or a body with an elliptical cross-section.

8. Production device according to one or more of claims 1 to 7,
**characterised in that**
the interstice body (8') has a deflecting piece (8") on at least one edge side.

9. Method for producing continuous fibre composite components with a hollow body structure, using a production device according to one or more of claims 1 to 8,
comprising the steps of
- the provision of the modular production device, involving the arrangement of the plurality of hollow bodies (7) in a row at an inner wall of the base element (2, 2'), the spacing of the hollow bodies (7) by a gap (8) and the location of the hollow bodies (7) on the base element (2, 2') by means of the at least one foot (6), wherein one reversing element (5) each is provided at the end face of the row of hollow bodies (7) at the inner wall of the base element (2, 2'),
- the feeding of a continuous fibre by means of the fibre guide tube (100) and the laying of the continuous fibre (9) along a laying path which at least comprises:
a) an under-floor path (u) running from a first reversing element (5) alternatingly around the feet (6) of the row of hollow bodies (7) to the second reversing element (5), while the fibre guide tube (100) is guided through the gaps (8),
b) a path (d) which defines a three-dimensional shape around the hollow bodies (7) and which runs at least from a first end of the row of hollow bodies (7) to a second end,
c) an upper path (o) running on the side of the hollow bodies (7) remote from the under-floor path (u) and running from a first end of the row of hollow bodies (7) to a second end, alternatingly around the deflecting pieces (8") of the interstice elements (8'), which have been inserted into the gaps (8) before laying the path c) and/or d), and
d) a side path (s) where the sides of the hollow bodies (7) are wrapped, involving the obtaining of an integral fibre semi-finished product, wherein the hollow bodies (7) form a core of the integral fibre semi-finished product by laying the continuous fibre (9) along the laying path.
then
- the impregnation of the fibre semi-finished product with a resin material and the obtaining of the continuous fibre composite component.

10. Method according to claim 9,
comprising the steps of:
for the provision of the modular production device, the positive connecting of at least two base elements (2, 2') to one another at their connecting openings (4, 4'), and
on obtaining an integral fibre semi-finished product, the releasable mounting of a cover element (3, 3') on each of the base elements (2, 2') forming the passage, involving the obtaining of a sheathing element (1, 1'), and
- the impregnation of the fibre semi-finished product with a resin material by filling the sheathing element (1, 1').

11. Method according to claim 10,
comprising the steps of:
for the provision of the modular production device, the positive connecting of a plurality of passage-forming base elements (2, 2') designed as brace elements (1) and node elements (1') at their connecting openings (4, 4'), involving the erection of a three-dimensional structure, and, on obtaining an integral fibre semi-finished product, the releasable mounting of a cover element (3, 3') on each of the base elements (2, 2'),
thereby obtaining an air-tight three-dimensional sheathing structure (10), and
- the impregnation of the fibre semi-finished product with a resin material by filling the sheathing structure (1).

12. Method according to claim 9,
wherein the fibre semi-finished product is impregnated with a resin material after the fibre semi-finished product made of continuous fibres (9) has been released from the base element (2, 2'), in particular using a vacuum bag.

13. Method according to any of claims 9 to 12,
comprising the step of:
filling the hollow bodies (7) before making the laying path, after finishing the laying path or after releasing the fibre semi-finished product made of continuous fibres (9) from the base element (2, 2'), involving
- the filling of the hollow bodies (7) with a filling material through the at least one foot (6).

14. Continuous fibre composite component comprising a continuous fibre arrangement which is wound and impregnated with a matrix material,
**characterised in that**
the continuous fibre composite component has a core which is formed by a plurality of hollow bodies (7) and interstice bodies (8') arranged in a row to alternate with the hollow bodies (7) and inserted into position between two adjacent hollow bodies (7).

15. Continuous fibre composite component according to claim 14,
**characterised in that**
the hollow bodies (7) have a filling made of a light-weight material, in particular of a light metal or a light alloy or of a polymer.

16. Continuous fibre composite component according to claim 14 or 15,
**characterised in that**
the continuous fibre composite component has a three-dimensional framework structure.

## Revendications

1. Dispositif de fabrication modulaire de demi-produits en fibres réalisés en une seule pièce à partir de fibres filaments (9) destiné à fabriquer des éléments composites en fibres filaments comportant une structure à corps creux, le dispositif de fabrication modulaire présentant au moins un tube de guidage de fibres (100) guidé de manière mobile, au moins un élément de base (2, 2'), une pluralité de corps creux (7), qui peuvent être placés en rangée, séparés par un interstice (8), sur une paroi intérieure de l'élément de base (2,2'), chaque corps creux (7) présentant au moins sur un côté au moins un socle (6) et l'interstice (8) présentant une largeur qui offre un passage pour le tube de guidage de fibres (100), et une pluralité de corps d'espace intermédiaire (8'), un corps d'espace intermédiaire (8') pouvant être introduit dans l'interstice (8) de manière précisément ajustée par rapport à la forme de l'interstice, et l'élément de base (2, 2') présentant sur la paroi intérieure côté frontal de la rangée sur les corps creux (7) respectivement un élément de renvoi (5) destiné à détourner les fibres filaments.

2. Dispositif de fabrication selon la revendication 1, **caractérisé en ce que** le dispositif de fabrication modulaire comprend l'élément de base (2, 2') comportant au moins un élément de couvercle (3, 3') pouvant être fixé amovible à l'élément de base (2, 2') en tant qu'élément de coffrage (1, 1') pour les éléments composites en fibres filaments.

3. Dispositif de fabrication selon la revendication 2, **caractérisé en ce que** le dispositif de fabrication modulaire comprend une pluralité d'éléments de coffrage (1, 1') en tant qu'éléments d'un ensemble d'éléments de coffrage destiné à former des structures à corps creux tridimensionnelles, l'ensemble d'éléments de coffrage présentant une pluralité d'éléments de base (2, 2') formant un canal, qui fournissent des ouvertures de liaison (4, 4'), qui permettent de relier au moins deux éléments de base (2, 2') par complémentarité de forme.

4. Dispositif de fabrication selon la revendication 2 ou la revendication 3, **caractérisé en ce que** les éléments de coffrage (1, 1') de l'ensemble d'éléments de coffrage sont des éléments entretoises (1) et des éléments de noeud (1') permettant de fabriquer une structure de coffrage (10) tridimensionnelle fermée hermétiquement à l'air, les éléments entretoise (1) et les éléments de noeud (1') étant chacun composé des éléments de base (2, 2') formant le canal et des éléments (3, 3') de couvercle.

5. Dispositif de fabrication selon au moins l'une quelconque des revendications 1 à 4, **caractérisé en ce que** le socle (6) fournit une ouverture de remplissage de corps creux.

6. Dispositif de fabrication selon au moins l'une quelconque des revendications 1 à 5, **caractérisé en ce que** sur la paroi interne de l'élément de base (2,2) pour chacun des corps creux à fixer (7) est disposée une saillie qui peut être amenée en prise amovible avec l'au moins un socle (6) par complémentarité de forme.

7. Dispositif de fabrication selon l'au moins l'une quelconque des revendications 1 à 6, **caractérisé en ce que** le corps d'espace creux (7) est un polyèdre, en particulier un parallélépipède, un cylindre ou un corps comportant une section elliptique.

8. Dispositif de fabrication selon au moins l'une quelconque des revendications 1 à 7, **caractérisé en ce que** le corps d'espace intermédiaire (8) présente sur au moins un côté cornier un support de détournement (8").

9. Procédé de fabrication d'éléments composites en fibres filaments comportant une structure à corps creux faisant appel à un dispositif de fabrication selon au moins l'une quelconque des revendications 1 à 8, comprenant les étapes suivantes :
- préparer le dispositif de fabrication modulaire, pour cela disposer la pluralité de corps creux (7) en rangée sur une paroi intérieure de l'élément de base (2,2'), , séparer les corps creux (7) les uns des autres par un interstice (8), et fixer les corps creux (7) sur l'élément de base (2, 2') au moyen d'au moins un socle (6), un élément de renvoi (5) étant respectivement disposé côté frontal de la rangée prévue de corps creux (7) sur la paroi intérieure de l'élément de base (2, 2'),
- guider une fibre filament à l'aide du tube de guidage de fibres (100) et déposer la fibre filament (9) le long d'un chemin de pose, qui comprend au moins :
a) un chemin inférieur (u), qui s'étend à partir d'un premier élément de renvoi (5) et en alternance autour des socles (6) de la rangée de corps creux (7) jusqu'au second élément de renvoi (5), en guidant le tube de guidage de fibre (100) à travers les interstices (8),
b) un chemin (d), qui décrit une forme tridimensionnelle autour des corps creux (7) et qui s'étend au moins à partir d'une première extrémité de la rangée de corps creux (7) jusqu'à la seconde extrémité,
c) un chemin supérieur (o), qui s'étend sur le côté en regard du chemin inférieur (u) des corps creux (7) et qui s'étend à partir d'une première extrémité de la rangée de corps creux (7) jusqu'à la seconde extrémité en alternance autour des supports de détournement (8") des éléments d'espace intermédiaire (8'), qui ont été insérés dans les interstices (8) avant le dépôt du chemin c) et/ou d), et
d) un chemin latéral (s), les côtés des corps creux (7) étant enroulés, obtenant ainsi un demi-produit en fibres réalisé en une seule pièce, les corps creux (7) formant par dépôt des fibres filaments (9) le long du chemin de pose un coeur du demi-produit en fibres réalisé en une seule pièce,
ensuite
- imprégner le demi-produit en fibre d'un matériau de résine et obtenir l'élément composite en fibres filaments

10. Procédé selon la revendication 9, comprenant les étapes
afin de préparer le dispositif de fabrication modulaire, relier au moins deux éléments de base (2, 2') à leurs ouvertures de liaison (4, 4') par complémentarité de forme, et après l'obtention d'un demi-produit en fibres réalisé en une seule pièce fixer de manière amovible un élément de couvercle (3, 3') sur un élément de base (2, 2') formant le canal respectivement,
pour ainsi obtenir un élément de coffrage (1, 1') et
- imprégner le demi-produit en fibre d'un matériau de résine par remplissage de l'élément de coffrage (1, 1').

11. Procédé selon la revendication 10, comprenant les étapes consistant à préparer le dispositif de fabrication modulaire, relier une pluralité d'éléments de base (2, 2') formant le canal, qui sont conçus en tant qu'éléments entretoises (1) et éléments de noeuds (V), les uns aux autres par complémentarité de forme à leurs ouvertures de liaison (4, 4'), formant ainsi une structure tridimensionnelle, et après l'obtention d'un demi-produit en fibres réalisé en une seule pièce, fixer un élément de couvercle (3, 3') sur un élément de base (2, 2') respectivement, obtenant ainsi une structure de coffrage (10) tridimensionnelle fermée hermétiquement à l'air et
- imprégner le demi-produit en fibre d'un matériau de résine par remplissage de l'élément de coffrage (1, 1').

12. Procédé selon la revendication 9, l'imprégnation du demi-produit en fibres d'un matériau de résine est effectuée après que le demi-produit en fibre fabriqué en fibres filament (9) est dégagé de l'élément de base (2, 2'), en particulier à l'aide d'un sac sous vide.

13. Procédé selon l'une quelconque des revendications 9 à 12, comprenant l'étape consistant à remplir le corps creux (7) avant l'exécution du chemin de pose après l'achèvement du chemin de pose ou après le dégagement du demi-produit en fibres réalisé en fibres filaments (9) de l'élément de base (2, 2'), pour cela
- remplir le corps creux (7) d'un matériau de remplissage par l'au moins un socle (6).

14. Élément composite en fibres filaments qui comprend un agencement de fibres filaments enroulées, imprégné d'un matériau à matrice, **caractérisé en ce que** l'élément composite en fibres filaments présente un coeur qui est formé par une pluralité de corps creux (7) et en alternance avec des corps d'espace intermédiaire (8') disposés en rangée avec les corps creux (7), qui sont insérés de manière précisément ajustée entre deux corps creux (7) adjacents.

15. Élément composite en fibres filaments selon la revendication 14, **caractérisé en ce que** les corps creux (7) présentent un remplissage composé d'un matériau léger, en particulier d'un métal léger ou d'un alliage métallique léger ou encore d'un polymère.

16. Élément composite en fibres filaments selon la revendication 14 ou la revendication 15, **caractérisé en ce que** l'élément composite en fibres filaments présente une structure d'ossature tridimensionnelle.
